# EUROPÄISCHE PATENTSCHRIFT

(11) **EP 1 498 635 B1**
(45) Veröffentlichungstag und Bekanntmachung des Hinweises auf die Patenterteilung: **15.10.2008**
(21) Anmeldenummer: 04014284.6
(22) Anmeldetag: 18.06.2004
(51) Int. Cl.: F16F 9/02, F16F 9/36

(54) **Verstellelement mit einem Zylinder**
Adjusting element with a cylinder
Elément de réglage comportant un cylindre

(30) Priorität: 15.07.2003 DE 10331921
(43) Veröffentlichungstag der Anmeldung: 19.01.2005
(73) Patentinhaber: Stabilus GmbH, 56070 Koblenz (DE)
(72) Erfinder: Schilz, Arnold, 56112 Lahnstein (DE)
(74) Vertreter: Klein, Thomas

(56) Entgegenhaltungen:
- DE-A- 4 101 567
- DE-C- 10 202 415
- DE-C- 19 535 711
- DE-U- 9 218 795
- US-A- 4 901 594

## Beschreibung

Die Erfindung bezieht sich auf ein Verstellelement mit einem Zylinder, dessen Innenraum ein unter Druck stehendes Medium enthält, mit einem in dem Zylinder verschiebbar angeordneten Kolben, der eine Kolbenstange aufweist, die an einem Ende des Zylinders aus dem Zylinder herausragt, mit einer die Kolbenstange umschließenden Ringdichtung, die mit ihrem inneren radial umlaufenden Umfang an der Kolbenstange und mit ihrem äußeren radial umlaufenden Umfang an der Innenwand des Zylinders dichtend in Anlage ist, auf ihrer, dem Innenraum zugewandten Seite, von dem Druck des Mediums beaufschlagt ist und mit ihrer dem Innenraum abgewandten Seite an einem Abstützelement abgestützt ist, welches sich wiederum mit seinem der Ringdichtung abgewandten Ende an einem Teil des Zylinders abstützt und einem Sicherheitselement, das aus einem schmelzbaren Material besteht, wodurch eine Durchtrittsöffnung vom Innenraum des Zylinders zur Umgebung herstellbar ist.

Bei derartigen Verstellelementen, die vorzugsweise Gasfedern sind, ist der mit dem Medium gefüllte Innenraum bei Überschreiten eines bestimmten Innendrucks im Zylinder mit der Umgebung verbindbar, um einen hohen Innendruck im Zylinder zu vermeiden. Ein zu hoher Innendruck, der z.B. im Falle eines Brandes in der Umgebung des Verstellelementes durch Temperaturerhöhung entstehen kann, kann zu einer Zerstörung des Zylinders oder zu einem Herausdrücken der Kolbenstange aus dem Zylinder führen.

Gasfedern dieser Art können pneumatische Verstellelemente zur leichten Handhabung für die Kofferraumklappe bzw. die Motorhaube eines Kraftfahrzeugs sein, die einen Gewichtsausgleich der verstellten Teile bilden.

Ein Verstellelement der eingangs genannten Art ist aus der DE 41 01 567 bekannt. Bei Überschreiten einer bestimmten Temperatur wird das aus einem Thermoplast bestehende Abstützelement weich und die Ringdichtung zur Austrittsöffnung der Kolbenstange aus dem Zylinder hin verschoben und damit eine Bohrung im Zylinder freigegeben, über die der Innenraum des Zylinders mit der Umgebung verbunden wird, so daß das im Zylinder enthaltene Medium in die Umgebung entweichen kann. Dabei ist es von Nachteil, daß durch die Bohrung Feuchtigkeit in den Zylinder eintreten kann, was zu Korrosion führt.

Aus der DE 195 35 711 C1 ist ein Verstellelement bekannt, dessen Kolbenstange von einer Kolbenstangenführung zum Zylinder zentriert wird. Zur Abdichtung der Kolbenstange ist eine Ringdichtung vorgesehen, die von der Kolbenstangenführung und einer Fixierhülse festgelegt wird. Die Position der Fixierhülse ist durch eine umlaufende Sicke im Zylinder bestimmt. Im weiteren Verlauf ist nach der Sicke eine zweite Hülse angeordnet, die eine Vorspannung gegenüber dem Innendurchmesser des Zylinders aufweist und damit radial und axial in ihrer Einbaulage gehalten wird. Die zweite Hülse bildet einen Anschlag für den Kolben und begrenzt so die Auswärtsbewegung von Kolben und Kolbenstange. Die zweite Hülse besteht aus einem oberhalb einer bestimmten Temperatur schmelzbaren Material. Kommt es zu einer Erhöhung der Temperatur über die bestimmte Temperatur hinaus, so schmilzt die Hülse und der Kolben mit der Kolbenstange kann sich weiter nach außen verschieben. Dabei gelangt eine in der Kolbenstange angeordnete Querschnittsverjüngung in den Bereich der Ringdichtung, so daß ein Bypass an die Umgebung geschaffen wird, über den das im Zylinder enthaltene Gas entweichen kann. Diese für die Bypassbildung notwendige Querschnittsverjüngung der Kolbenstange führt zu einer Schwächung der Kolbenstange. Bedingt durch die Anordnung der Hülse aus schmelzbarem Material benötigt die Verstellvorrichtung in axialer Erstreckung einen größeren Bauraum als herkömmliche Verstellvorrichtungen.

Aus der DE 102 02 415 C ist ein Verstellelement der eingangs genannten Art bekannt.

Dabei besteht das Abstützelement aus zwei Teilen, die an ihren einander zugewandten Enden miteinander verbunden sind, wobei diese Verbindung bei Überschreiten einer bestimmten Axialbelastung durch thermische Überlastung des Verstellelements und damit Erhöhen des Innendrucks im Zylinder überwunden wird, so daß die beiden Teile teleskopisch ineinandergeschoben werden.

Aus der US-A-4 901 504 ein Verstellelement mit einem Zylinder bekannt, in dessen Innenraum ein Kolben verschiebbar angeordnet ist, von dem eine Kolbenstange an dem einen Ende des Zylinders abgedichtet nach außen geführt ist. Das andere Ende des Zylinders ist durch einen Verschluß geschlossen, in dem ein von dem Innenraum nach außen führender Kanal ausgebildet ist. Die in den Innenraum des Zylinders mündende Öffnung des Kanals ist durch einen Stopfen verschlossen, der bei Überschreiten einer bestimmten Temperatur schmilzt und damit den Kanal öffnet.

Aufgabe der Erfindung ist es, ein Verstellelement der eingangs genannten Art zu schaffen, das diese Nachteile vermeidet und bei einem Temperaturanstieg und der damit verbundenen Druckerhöhung im Innenraum des Zylinders über einen bestimmten Innendruck hinaus zu einer sicheren Druckentlastung des Innenraums führt, sowie mit wenigen einfachen Bauteilen aufgebaut ist.

Diese Aufgabe wird erfindungsgemäß dadurch gelöst, daß das Sicherungselement aus einem schmelzenden oder sublimierenden Material besteht und zusammen mit dem Abstützelement ein Bauteil ist, wobei das schmelzende oder sublimierende Material des Abstützelements durch die Durchtrittsöffnung in die Umgebung abführbar ist.

Das Abstützelement dient im Normalbetrieb zur Fixierung der Ringdichtung. Bei einer thermischen Überbelastung dient es als Sicherheitselement, um eine durch einen Temperaturanstieg hervorgerufene Druckerhöhung, die zur Beschädigung oder Zerstörung des Zylinders führen würde, zu vermeiden. Bei einem Überschreiten einer bestimmten Temperatur schmilzt oder sublimiert das Abstützelement. Infolge des Drucks im Innenraum des Zylinders wird die Ringdichtung aufgrund des nicht mehr vorhandenen Abstützelements bzw. dessen verringerter axialen Länge zur Austrittsöffnung der Kolbenstange aus dem Zylinder hin verschoben. Dadurch wird eine Durchtrittsöffnung vom Innenraum des Zylinders zu einem mit der Umgebung verbundenen Bereich geschaffen, die ein Ausströmen des unter Druck stehenden Mediums, insbesondere eines Gases, aus dem Innenraum des Zylinders in die Umgebung ermöglicht und so den Druck im Zylinder abbaut.

Durch die Kombination des Abstützens und der Sicherung durch das Abstützelement erfordert das Verstellelement besonders wenige Bauteile. Damit ist sie einfach aufgebaut und benötigt in axialer Erstreckung nicht mehr Bauraum als herkömmliche Verstellelemente.

Eine für die Stützfunktion ausreichende Festigkeit des Abstützelements mit einer bei einer thermischen Überlastung ausreichenden Sicherheitsfunktion wird erreicht, wenn das Material ein Metall oder eine Metallegierung mit niedriger Schmelztemperatur ist. Insbesondere Zink, Zinkdruckguß oder Zinkfeinlegierungen mit dem Handelsnamen Zamak haben sich als vorteilhaft erwiesen.

Die Durchtrittsöffnung wird durch eine axial an der Innenwand des Zylinders angeordnet Nut gebildet. Die Nut erstreckt sich von der Durchtrittsöffnung der Kolbenstange aus dem Zylinder bis in Höhe des Abstützelements. Beim Schmelzen des Abstützelements gelangt die Ringdichtung in den Bereich, in dem vormals das Abstützelement angeordnet war, so daß der Innenraum des Zylinders über die Nut in der Innenwand des Zylinders mit der Umgebung verbunden ist. Die Nut ist mit geringem Aufwand während der Herstellung des Zylinders oder nachträglich herstellbar.

Um ein hinreichend schnelles Abführen des schmelzenden oder sublimierenden Abstützelements zu gewährleisten, muß die Nut eine bestimmte Querschnittsfläche besitzen. Eine infolge der Querschnittsfläche zu große Schwächung der Zylinderwand wird vermieden, wenn die notwendige Querschnittsfläche von mehreren Nuten gebildet wird. Sofern die thermische Überbelastung das Verstellelement nur aus einer Richtung beaufschlagt, gewährleistet eine gleichmäßige Anordnung von vorzugsweise drei, bzw. vier in der Zylinderwand in einem Abstand von etwa 120°, bzw. 90° angeordneten Nuten, einen frühzeitigen Austritt des geschmolzenen bzw. sublimierenden Abstützelements an der am höchsten belasteten Seite, auch wenn das Abstützelement in anderen Bereichen infolge der Wärmeleitfähigkeit noch nicht aufgeschmolzen bzw. sublimiert ist. Dadurch wird früher die Durchtrittsöffnung zum Verbinden des Innenraums des Zylinders mit der Umgebung geschaffen, und die zur Zerstörung des Verstellelements führenden Belastungen können eher abgebaut werden.

Eine Durchtrittsöffnung wird ebenfalls dadurch geschaffen, daß das Abstützelement einen Anschlag aus einem höherschmelzenden Material besitzt, der sich an der Stirnwand abstützt und axial zur Erstreckung des Zylinders zumindest bis nahe an die Ringdichtung ragt. Infolge des sich auflösenden, zumindestens in seiner axialen Länge verringernden Abstützelements und des Innendrucks wird die Ringdichtung nach außen bewegt, wobei sie an mindestens einer Stelle von dem Anschlag so beaufschlagt wird, daß es zumindest zu einem Abheben der Ringdichtung von der Innenwand des Zylinders kommt, wenn nicht sogar zu einer Beschädigung der Ringdichtung.

Der Anschlag kann ein stiftartiger Stößel sein, der die Ringdichtung an einer Stelle beaufschlagt.

Der Anschlag läßt sich neben der Kolbenstange anordnen, wenn das Abstützelement eine Stützscheibe aus einem höherschmelzenden Material besitzt, die zur Abstützung auf der umgebördelten Stirnwand des Zylinders aufliegt. Die Stützscheibe trägt sowohl den Anschlag als auch das schmelzende oder sublimierende Material des Abstützelements. Die Verwendung einer derartigen Stützscheibe führt zu einer Erhöhung der Stabilität des Abstützelements im Normalbetrieb, da die Festigkeit verringernde dynamische Prozesse im schmelzenden oder sublimierenden Material, z.B. Kriechen, verhindert werden.

Die Ausbildung des Anschlags als separates Bauteil und dessen Montage wird vermieden, wenn der Anschlag einteilig mit der Stützscheibe verbunden ist. Die Herstellung gestaltet sich besonders kostengünstig, wenn Anschlag und Stützscheibe als Stanzteil ausgebildet ist.

Die Anordnung von Nuten in der Innenwand des Zylinders, sowie Bohrungen an dessen umgebördelter Stirnwand lassen sich vermeiden, wenn in der Stützscheibe Ausnehmungen in Form von Schlitzen, die radial vom äußeren Rand der Stützscheibe nach innen verlaufen, vorgesehen sind oder die Stützscheibe eine Gitterstruktur aufweist. Über die Ausnehmungen erfolgt im Falle einer thermischen Überbelastung der Austritt des schmelzenden oder sublimierenden Materials an die Umgebung. Gleichzeitig wird darüber die Durchtrittsöffnung des Innenraums des Zylinders an die Umgebung geschaffen.

Die Stabilität der Stützscheibe wird durch die Schlitze nur gering geschwächt, wenn die radiale Länge und die Breite der Schlitze klein ist. Insbesondere die radiale Länge der Schlitze beträgt vorzugsweise etwa ein Drittel des Radius der Stützscheibe.

Die Ausnehmungen können beliebige Ausgestaltungen und Anordnungen besitzen. Neben einer Ausbildung der Stützscheibe mit einer Gitterstruktur, wird eine einfach herzustellende Anordnung der Ausnehmungen bei gleichzeitig hoher Stabilität der Stützscheibe mit einer gleichmäßig verteilten Anordnung der Ausnehmungen auf einem Kreis erreicht.

Das Abheben der Ringdichtung von der Innenwand des Zylinders oder der Kolbenstange durch den Anschlag wird erleichtert, wenn die Ringdichtung eine an der Kolbenstange und/oder an der Innenwand des Zylinders anliegende innere und/oder äußere Dichtlippe aufweist.

Damit zwar die Dichtlippen flexibel, die Basis der Ringdichtung aber formstabil ist, kann die Ringdichtung einen Stabilisierungsring aus einem Material geringerer Flexibilität als dem Material der Ringdichtung aufweisen, an dem der Anschlag radial innen und/oder außen axial vorbeibewegbar ist.

Ausführungsbeispiele der Erfindung sind in der Zeichnung dargestellt und werden im folgenden näher beschrieben. Es zeigen
- Figur 1: einen Ausschnitt einer Seitenansicht eines ersten Ausführungsbeispiels eines Verstellelements in Normalposition im Schnitt
- Figur 2: das Verstellelement nach Figur 1 nach einer thermischen Überbelastung
- Figur 3: einen Ausschnitt einer Seitenansicht eines zweiten Ausführungsbeispiels des Verstellelements in Normalposition im Schnitt
- Figur 4: das Verstellelement nach Figur 3 nach einer thermischen Überbelastung
- Figur 5: eine Stimansicht der Stützscheibe des Abstützelements nach Figur 3
- Figur 6: eine zweite Ausführungsform der Stützscheibe des Abstützelements nach Figur 3.

Das in den Figuren dargestellte Verstellelement besitzt einen rohrartigen Zylinder 1, dessen Wandung an dem einen Ende des Zylinders 1 zu einer Stirnwand 2 umgebördelt ist. Koaxial zur Längserstreckung des Zylinders 1 ist in der Stirnwand 2 eine durchgehende Durchtrittsöffnung 3 ausgebildet.

In dem Zylinder 1 ist ein nicht dargestellter Kolben verschiebbar angeordnet, der eine Kolbenstange 4 besitzt, die durch die Durchtrittsöffnung 3 nach außen ragt.
Die Kolbenstange 4 ist von einer Ringdichtung 5 umschlossen, die mit ihrer radial umlaufenden inneren Dichtlippe 6 an der Kolbenstange 4 und mit ihrer radial umlaufenden äußeren Dichtlippe 7 an der Innenwand des Zylinders 1 in Anlage ist. Die Dichtlippen 6 und 7 sind auf der dem Innenraum 8 des Zylinders 1 zugewandten Seite der Ringdichtung 5 angeordnet und werden durch ein im Innenraum 8 befindliches, unter Druck stehendes Gas gegen die Kolbenstange 4 bzw. die Innenwand des Zylinders 1 beaufschlagt.

Zur Stabilisierung der Ringdichtung 5 besitzt diese an ihrer, dem Innenraum 8 abgewandten Seite, einen eingesetzten Stabilisierungsring 9 aus einem Material geringerer Flexibilität als dem Material der Ringdichtung 5.

Mit ihrer dem Innenraum 8 abgewandten ringförmigen Fläche ist die von dem Gasdruck beaufschlagte Ringdichtung 5 an einem Abstützelement 10 abgestützt. Dieses Abstützelement 10 ist als Buchse ausgebildet. Das Abstützelement 10 besteht aus einer Zinkfeinlegierung. Mit seiner, der Ringdichtung 5 abgewandten Seite 11, liegt das Abstützelement 10 auf einer Scheibe 12 auf, die mit ihrer, der Stirnwand 2 zugewandten Stirnfläche, an der Stirnwand 2 aufliegt. Eine koaxiale Bohrung 13 in der Scheibe 12 umschließt die Kolbenstange 4 und bildet eine Führung für die Kolbenstange 4.

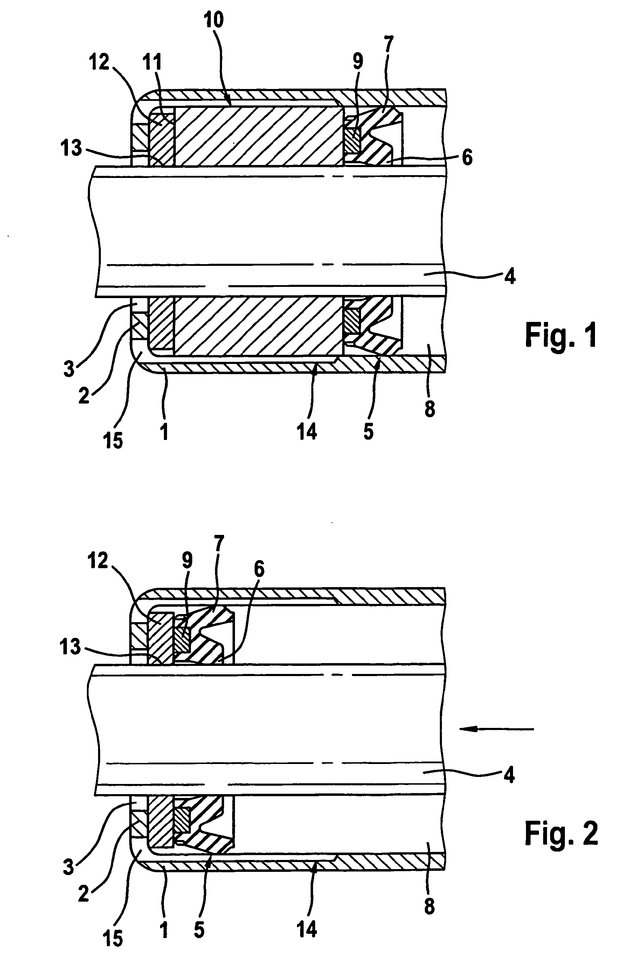

Die Innenwand des Zylinders 1 in den Figuren 1 und 2 weist vier im Abstand von 90° am Umfang verteilte, axial verlaufende Nuten 14 auf, die sich von der Stirnwand 2 bis in eine Höhe unmittelbar unterhalb der Ringdichtung 5 erstrecken. An ihren, der Ringdichtung 5 abgewandten Enden, gehen die Nuten 14 in Bohrungen 15 über, die die Stimwand 2 des Zylinders 1 durchdringen.

Figur 2 zeigt das Verstellelement bei einer thermischen Überbelastung. Infolge der Wärmeeinwirkung schmilzt das aus einer Zinkfeinlegierung bestehende Abstützelement 10 Über die Nuten 14 gelangt die geschmolzene Zinkfeinlegierung an die Umgebung. Gleichzeitig führt der Gasdruck im Innenraum 8 dazu, daß die Ringdichtung 5 in Richtung Stirnwand 2 bewegt wird. Dabei gelangt die Ringdichtung 5 in den Bereich der Nuten 14. In dieser Position ist der Innenraum 8 über die Nuten 14 mit der Umgebung verbunden, so daß das im Innenraum befindliche Gas nach außen entweichen kann, um so den durch die Wärmeeinwirkung entstandenen Überdruck im Innenraum 8 abzubauen.

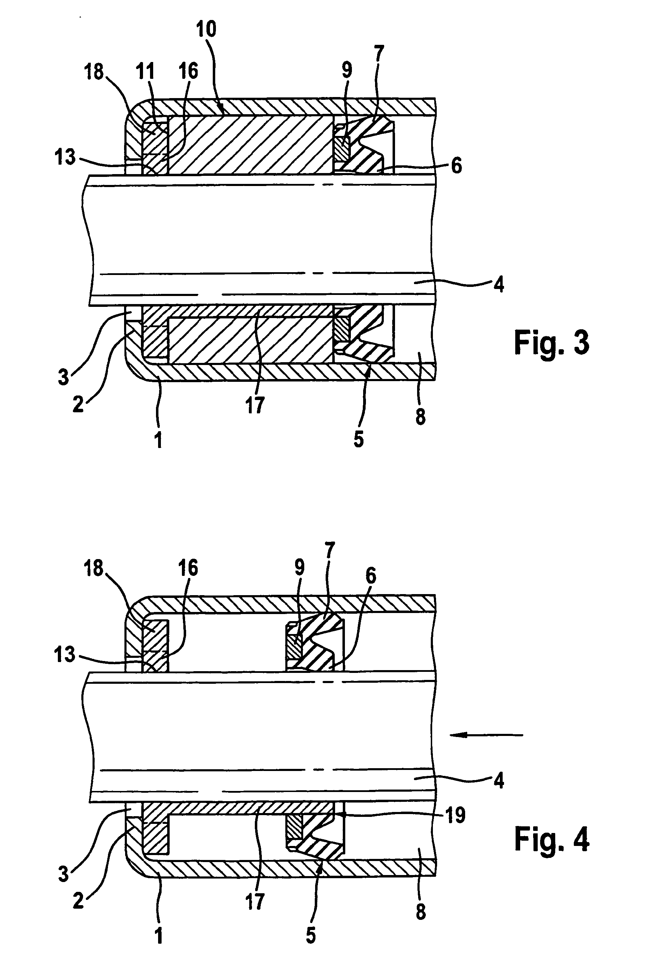

Das Abstützelement in Figur 3 besitzt eine Stützscheibe 16, auf der die Zinkfeinlegierung angeordnet ist. Die Stützscheibe 16 stützt sich an der Stimwand 2 ab. Mit der Stützscheibe 16 ist ein stiftartiger Stößel 17 einteilig verbunden. Der Stößel 17 erstreckt sich axial neben der Kolbenstange 4 von der Stützscheibe 16 bis unmittelbar an die Ringdichtung 5 im Bereich deren innerer Dichtlippe 6 heran.

Bei einer thermischen Überbelastung nach Figur 4 schmilzt die Zinkfeinlegierung und tritt durch Ausnehmungen 18 an die Umgebung. Mit der infolge des Schmelzens abnehmenden axialen Länge des Abstützelements 10 bewegt sich die Ringdichtung 5 infolge des Gasdrucks im Innenraum 8 in Richtung Stirnwand 2. Durch diese Bewegung wird die Ringdichtung 5 im Bereich ihrer inneren Dichtlippe 6 von dem Stößel 17 derart beaufschlagt, daß im Bereich des Stößels 17 die Dichtlippe 6 von der Kolbenstange 4 durchstoßen und eine Durchtrittsöffnung 19 vom Innenraum 8 über die Ausnehmungen 18 zu der Umgebung hergestellt wird.

Über diese Durchtrittsöffnung 19 und die Ausnehmungen 18 in der Stützscheibe 16 kann das Gas aus dem Innenraum 8 in die Umgebung entweichen, wodurch der Gasdruck im Innenraum 8 abgebaut wird.

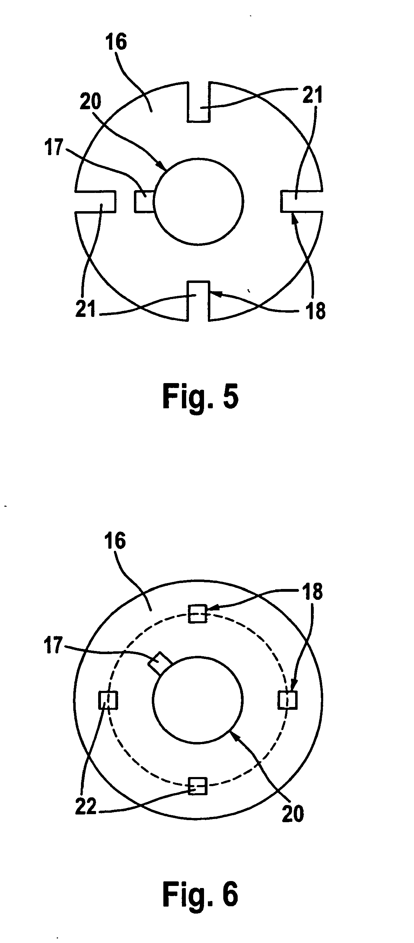

Die Stützscheibe 16 in Figur 5 besitzt eine koaxiale Bohrung 20 zur Aufnahme der Kolbenstange 4. An dieser koaxialen Bohrung 20 ist der parallel zur Kolbenstange 4 verlaufende Stößel 17 angeordnet. In der Stützscheibe 16 sind Ausnehmungen 18 in Form von vier gleichmäßig, in einem Abstand von 90° angeordneten Schlitzen 21 vorgesehen. Die Schlitze 21 erstrecken sich vom radial äußeren Rand der Stützscheibe 16 radial nach innen. Die radiale Länge der Schlitze 21 beträgt ein Drittel des Radius der Stützscheibe 16.

Die Ausnehmungen 18 in der Stützscheibe 16 in Figur 6 sind ringförmig um die Bohrung 20 angeordnet. Die Ausnehmungen 18 sind als Rechtecke 22 mit geringer Seitenlänge ausgebildet, wodurch eine ausreichende Stabilität der Stützscheibe 16 gewährleistet wird.

### Bezugszeichenliste

- 1 -: Zylinder
- 2 -: Stirnwand
- 3 -: Durchtrittsöffnung
- 4 -: Kolbenstange
- 5: - Ringdichtung
- 6 -: innere Dichtlippe
- 7 -: äußere Dichtlippe
- 8 -: Innenraum
- 9 -: Stabilisierungsring
- 10 -: Abstützelement
- 11 -: Seite
- 12 -: Scheibe
- 13 -: koaxiale Bohrung
- 14 -: Nuten
- 15 -: Bohrungen
- 16 -: Stützscheibe
- 17 -: Stößel
- 18 -: Ausnehmungen
- 19-: Durchtrittsöffnungen
- 20 -: koaxiale Bohrung
- 21 -: Schlitze.
- 22 -: Rechteck

## Patentansprüche

1. Verstellelement mit einem Zylinder (1), dessen Innenraum (8) ein unter Druck stehendes Medium enthält, mit einem in dem Zylinder (1) verschiebbar angeordneten Kolben, der eine Kolbenstange (4) aufweist, die an einem Ende des Zylinders (1) aus dem Zylinder (1) herausragt, mit einer die Kolbenstange (4) umschließenden Ringdichtung (5), die mit ihrem inneren radial umlaufenden Umfang an der Kolbenstange (4) und mit ihrem äußeren radial umlaufenden Umfang an der Innenwand des Zylinders (1) dichtend in Anlage ist, auf ihrer dem Innenraum (8) zugewandten Seite von dem Druck des Mediums beaufschlagt ist und mit ihrer dem Innenraum (8) abgewandten Seite an einem Abstützelement (10) abgestützt ist, welches sich wiederum mit seinem der Ringdichtung (5) abgewandten Ende an einem Teil des Zylinders (1) abstützt und einem Sicherheitselement, das bei thermischer Überlastung seine axiale Länge verkürzend ausgeführt ist, wodurch eine Durchtrittsöffnung (3, 15) vom Innenraum (8) des Zylinders (1) zur Umgebung herstellbar ist, **dadurch gekennzeichnet, daß** das Sicherheitselement aus einem schmelzenden oder sublimierenden Material besteht und zusammen mit dem Abstützelement (10) ein Bauteil ist, wobei das schmelzende oder sublimierende Material des Abstützelements (10) durch die Durchtrittsöffnung (3, 15) in die Umgebung abführbar ist.

2. VerstellelementnachAnspruch 1, **dadurch gekennzeichnet, daß** das Abstützelement (10) aus einem Metall oder einer Metallegierung mit niedriger Schmelztemperatur besteht.

3. Verstellelement nach Anspruch 2, **dadurch gekennzeichnet, daß** das Abstützelement (10) aus Zink, Zinkdruckguß oder einer Zinkfeinlegierung besteht.

4. Verstellelement nach einem der vorhergehenden Ansprüche, **dadurch gekennzeichnet, daß** die Innenwand des Zylinders (1) mindestens eine radial angeordnete und axial verlaufende Nut (14) besitzt, wobei sich die Nuten (14) von einer Stirnwand (2) am Ende des Zylinders (1) bis in Höhe des Abstützelements (10) erstrecken.

5. Verstellelement nach Anspruch 4, **dadurch gekennzeichnet, daß** drei oder vier Nuten (14) gleichmäßig an der Innenwand des Zylinders (1) in einem Abstand von 120°, bzw. 90° verteilt angeordnet sind.

6. Verstellelement nach einem der vorhergehenden Ansprüche, **dadurch gekennzeichnet, daß** das Abstützelement (10) einen Anschlag besitzt, der in der Normalposition axial bis nahe zur Ringdichtung(5) ragt.

7. Verstellelement nach einem der vorhergehenden Ansprüche, **dadurch gekennzeichnet, daß** der Anschlag ein insbesondere aus Stahl bestehender, stiftartiger Stößel (17) ist.

8. Verstellelement nach Anspruch 4, **dadurch gekennzeichnet, daß** das Abstützelement (10) über eine Stützscheibe (16) an der Stirnwand (2) abgestützt ist.

9. Verstellelement nach den Ansprüchen 6 und 7, **dadurch gekennzeichnet, daß** der Anschlag und die Stützscheibe (16) einteilig ausgebildet sind.

10. Verstellelement nach einem der Ansprüche 8 und 9, **dadurch gekennzeichnet, daß** die Stützscheibe (16) axial durchgehende Ausnehmungen (18) aufweist.

11. Verstellelement nach Anspruch 10, **dadurch gekennzeichnet, daß** die Ausnehmungen (18) radial offene Schlitze (21) oder Rechtecke (22) sind.

12. Verstellelement nach Anspruch 11, **dadurch gekennzeichnet, daß** die Schlitze (21) vom radial äußeren Rand der Stützscheibe (16) radial nach innen verlaufend ausgebildet sind.

13. Verstellelement nach einem der Ansprüche 10 und 11, **dadurch gekennzeichnet, daß** die Länge der Schlitze (21) kleiner als der Radius der Stützscheibe (16) ist, vorzugsweise ein Drittel des Radius der Stützscheibe (16) beträgt.

14. Verstellelement nach einem der Ansprüche 11 bis 13, **dadurch gekennzeichnet, daß** die Schlitze (21) oder Rechtecke (22) auf einem Kreis gleichmäßig verteilt in der Stützscheibe (16) ausgebildet sind.

15. Verstellelement nach einem der vorhergehenden Ansprüche, **dadurch gekennzeichnet, daß** die Ringdichtung (5) einen Stabilisierungsring (9) aus einem Material geringerer Flexibilität als dem Material der Ringdichtung (5) aufweist, an dem der Anschlag (17) radial innen und /oder außen axial vorbeibewegbar ist.

## Claims

1. Adjusting element having a cylinder (1), the interior space (8) of which contains a medium under pressure, having a piston which is displaceably arranged in the cylinder (1) and has a piston rod (4) which projects from the cylinder (1) at one end of the cylinder (1), having an annular seal (5) which encloses the piston rod (4) and which bears tightly with its inner radially encircling circumference against the piston rod (4) and with its outer radially encircling circumference against the inner wall of the cylinder (1), and to which the pressure of the medium is applied on its side facing the interior space (8) and which, with its side remote from the interior space (8), is supported on a supporting element (10) which in turn, with its end remote from the annular seal (5), is supported on part of the cylinder (1), and having a safety element which is designed to shorten its axial length during thermal overloading, as a result of which a passage opening (3, 15) can be produced from the interior space (8) of the cylinder (1) to the environment, **characterized in that** the safety element is made of a melting or subliming material and is a component together with the supporting element (10), wherein the melting or subliming material of the supporting element (10) can be led through the passage opening (3, 15) to the environment.

2. Adjusting element according to Claim 1, **characterized in that** the supporting element (10) is made of a metal or a metal alloy having a low melting temperature.

3. Adjusting element according to Claim 2, **characterized in that** the supporting element (10) is made of zinc, a zinc die-casting or a precision zinc alloy.

4. Adjusting element according to one of the preceding claims, **characterized in that** the inner wall of the cylinder (1) has at least one radially arranged and axially running groove (14), the grooves (14) extending from an end wall (2) at the end of the cylinder (1) right up to the level of the supporting element (10).

5. Adjusting element according to Claim 4, **characterized in that** three or four grooves (14) are arranged in a uniformly distributed manner on the inner wall of the cylinder (1) at a distance apart of 120° or 90°, respectively.

6. Adjusting element according to one of the preceding claims, **characterized in that** the supporting element (10) has a stop which in the normal position projects axially up close to the annular seal (5).

7. Adjusting element according to one of the preceding claims, **characterized in that** the stop is a pin-like plunger (17) made in particular of steel.

8. Adjusting element according to Claim 4, **characterized in that** the supporting element (10) is supported on the end wall (2) via a supporting disc (16).

9. Adjusting element according to Claims 6 and 7, **characterized in that** the stop and the supporting disc (16) are formed in one piece.

10. Adjusting element according to either of Claims 8 and 9, **characterized in that** the supporting disc (16) has axially continuous apertures (18).

11. Adjusting element according to Claim 10, **characterized in that** the apertures (18) are radially open slots (21) or rectangles (22).

12. Adjusting element according to Claim 11, **characterized in that** the slots (21) are designed to run radially inwards from the radially outer margin of the supporting disc (16).

13. Adjusting element according to either of Claims 10 and 11, **characterized in that** the length of the slots (21) is less than the radius of the supporting disc (16), and preferably amounts to one third of the radius of the supporting disc (16).

14. Adjusting element according to one of Claims 11 to 13, **characterized in that** the slots (21) or rectangles (22) are formed in the supporting disc (16) on a circle in a uniformly distributed manner.

15. Adjusting element according to one of the preceding claims, **characterized in that** the annular seal (5) has a stabilizing ring (9) made of material of lower flexibility than the material of the annular seal (5), and the stop (17) can be moved axially past the said stabilizing ring (9) radially on the inside and/or outside.

## Revendications

1. Elément de réglage comportant un cylindre (1), dont l'espace interne (8) contient un fluide sous pression, avec un piston disposé de manière coulissante dans le cylindre (1), lequel présente une tige de piston (4) qui sort du cylindre (1) à une extrémité du cylindre (1), avec une garniture d'étanchéité annulaire (5) entourant la tige de piston (4), qui est en application étanche avec sa périphérie radialement interne contre la tige de piston (4) et avec sa périphérie radialement externe contre la paroi interne du cylindre (1), qui est sollicitée sur son côté tourné vers l'espace interne (8) par la pression du fluide et qui est supportée avec son côté opposé à l'espace interne (8) sur un élément de support (10), qui s'appuie à son tour avec son extrémité opposée à la garniture d'étanchéité annulaire (5) contre une partie du cylindre (1) et avec un élément de sécurité qui est réalisé de manière à raccourcir sa longueur axiale en cas de contrainte thermique excessive, de sorte qu'une ouverture de passage (3, 15) puisse être créée depuis l'espace interne (8) du cylindre (1) vers l'environnement extérieur, **caractérisé en ce que** l'élément de sécurité se compose d'un matériau pouvant fondre ou se sublimer, et constitue, conjointement avec l'élément de support (10), un composant, le matériau de l'élément de support (10), pouvant fondre ou se sublimer, pouvant être évacué par l'ouverture de passage (3, 15) vers l'environnement extérieur.

2. Elément de réglage selon la revendication 1, **caractérisé en ce que** l'élément de support (10) se compose d'un métal ou d'un alliage de métaux ayant une basse température de fusion.

3. Elément de réglage selon la revendication 2, **caractérisé en ce que** l'élément de support (10) se compose de zinc, de fonte de zinc coulé sous pression ou d'un alliage fin de zinc.

4. Elément de réglage selon l'une quelconque des revendications précédentes, **caractérisé en ce que** la paroi interne du cylindre (1) possède au moins une rainure (14) disposée radialement et s'étendant axialement, les rainures (14) s'étendant depuis une paroi frontale (2) à l'extrémité du cylindre (1) jusqu'à la hauteur de l'élément de support (10).

5. Elément de réglage selon la revendication 4, **caractérisé en ce que** trois ou quatre rainures (14) sont réparties uniformément sur la paroi interne du cylindre (1) à une distance de 120° ou de 90°, respectivement.

6. Elément de réglage selon l'une quelconque des revendications précédentes, **caractérisé en ce que** l'élément de support (10) possède une butée qui s'étend axialement dans la position normale pratiquement jusqu'à la garniture d'étanchéité annulaire (5).

7. Elément de réglage selon l'une quelconque des revendications précédentes, **caractérisé en ce que** la butée est un poussoir (17) en forme de tige, constitué notamment d'acier.

8. Elément de réglage selon la revendication 4, **caractérisé en ce que** l'élément de support (10) est supporté sur la paroi frontale (2) par le biais d'une rondelle de support (16).

9. Elément de réglage selon les revendications 6 et 7, **caractérisé en ce que** la butée et la rondelle de support (16) sont réalisées d'une seule pièce.

10. Elément de réglage selon l'une quelconque des revendications 8 et 9, **caractérisé en ce que** la rondelle de support (16) présente des évidements traversant axialement (18).

11. Elément de réglage selon la revendication 10, **caractérisé en ce que** les évidements (18) sont des fentes (21) ou des rectangles (22) ouverts radialement.

12. Elément de réglage selon la revendication 11, **caractérisé en ce que** les fentes (21) sont réalisées en s'étendant radialement vers l'intérieur depuis le bord radialement extérieur de la rondelle de support (16).

13. Elément de réglage selon l'une quelconque des revendications 10 et 11, **caractérisé en ce que** la longueur des fentes (21) est inférieure au rayon de la rondelle de support (16), de préférence vaut un tiers du rayon de la rondelle de support (16).

14. Elément de réglage selon l'une quelconque des revendications 11 à 13, **caractérisé en ce que** les fentes (21) ou les rectangles (22) sont réalisés dans la rondelle de support (16) et sont répartis uniformément sur un cercle.

15. Elément de réglage selon l'une quelconque des revendications précédentes, **caractérisé en ce que** la garniture d'étanchéité annulaire (5) présente une bague de stabilisation (9) en un matériau de flexibilité inférieure à celle du matériau de la garniture d'étanchéité annulaire (5), devant laquelle la butée (17) peut glisser radialement à l'intérieur et/ou axialement à l'extérieur.
